# EUROPÄISCHE PATENTSCHRIFT

(11) **EP 0 687 228 B1**
(45) Veröffentlichungstag und Bekanntmachung des Hinweises auf die Patenterteilung: **18.06.1997**
(21) Anmeldenummer: 94911131.4
(22) Anmeldetag: 09.03.1994
(51) Int. Cl.: B60S 1/24, F16D 1/06

(54) **VERBINDUNG EINER WELLE BZW. BOLZEN MIT EINEM KURBELHEBEL EINER WISCHANLAGE**
CONNECTION OF A SPINDLE OR STUD WITH A CRANK LEVER OF A WIPER SYSTEM
ASSEMBLAGE D'UN ARBRE OU D'UN AXE AVEC UN LEVIER DE MANIVELLE D'UN SYSTEME D'ESSUIE-GLACE

(30) Priorität: 13.03.1993 DE 4307994
(43) Veröffentlichungstag der Anmeldung: 20.12.1995
(73) Patentinhaber: ITT Automotive Europe GmbH, 60488 Frankfurt (DE)
(72) Erfinder: EGNER-WALTER, Bruno, D-74076 Heilbronn (DE)
(74) Vertreter: Portwich, Peter
(86) Internationale Anmeldenummer: EP9400718
(87) Internationale Veröffentlichungsnummer: WO9421499

(56) Entgegenhaltungen:
- EP-A- 0 316 832
- DE-A- 3 643 474
- FR-A- 2 550 287
- GB-A- 2 151 915
- MACHINE DESIGN, Bd.59, Nr.12, 21. Mai 1987, CLEVELAND, OHIO (US) Seite 124 STRASSER 'Fastening Parts to Shafts'

## Beschreibung

Die Erfindung betrifft ein Getriebeteil für eine Wischanlage von Kraftfahrzeugen, wobei eine antreibbare Welle oder Bolzen mit einem Kurbelhebel verbunden sind (S. zum Beispiel FR-A-2 550 287, dem Oberbegriff entsprechend).

Aus der DE-OS 3 738 924 ist eine mit Längsverzahnung und einer Nut versehene Welle bekannt, die durch Kaltverformung mit einem Kurbelhebel unlösbar verbunden ist. Nachteilig bei dieser Verbindungsart ist es, daß zur Erzielung der notwendigen Festigkeit das Material des Hebels vergleichsweise dick gewählt werden muß, um eine hinreichende Anlagefläche des Hebels an der Welle zu erhalten. Durch die Verformung des Hebels ist es weiterhin notwendig, nach den einzelnen Bearbeitungsgängen dessen Oberfläche zu behandeln, um eine Korrosion zu verhindern. Das bekannte Herstellungsverfahren erfordert daher einen beachtlichen Aufwand.

Aus der DE-OS 3 643 747 ist es weiterhin bekannt, den Hebel aus verzinktem Tiefziehblech herzustellen und für eine vergrößerte Anlagefläche zwischen Hebel und Welle dadurch zu sorgen, daß durch Tiefziehen sogenannte Durchzüge geschaffen werden. Hierbei handelt es sich um umlaufende, kragenförmige Ansätze, welche mit ihrer in Längsrichtung der Welle sich erstreckenden Mantelfläche an der Welle anliegen. Bei der DE-OS 3 643 474 verjüngt sich der entsprechende Durchzug nach seinem freien Ende hin und nimmt einen entsprechend konisch geformten, mit Längsverzahnung versehenen Abschnitt der Welle auf. Das den Durchzug durchragende Ende der Welle ist mit einem Gewinde versehen, durch welches mittels einer Befestigungsmutter die Welle lösbar mit dem Durchzug verkeilt werden kann. Die für eine derartige Verbindung notwendige Bearbeitung sowie die Anzahl der erforderlichen Einzelteile stellt erhebliche Anforderungen.

Die vorliegende Erfindung geht daher aus von einem Getriebeteil der sich aus dem Oberbegriff des Anspruchs 1 ergebenden Gattung. Aufgabe der Erfindung ist es, ein derartiges Getriebeteil anzugeben, welches besonders einfach aufgebaut ist und eine dauerhafte Verbindung zwischen dem Kurbelhebel und der Welle erwarten läßt.

Die Erfindung löst die Aufgabe durch die sich aus dem kennzeichnenden Teil des Anspruchs 1 ergebende Merkmalskombination. Die Erfindung besteht im Prinzip also darin, die Zugänglichkeit der äußeren Mantelfläche des Durchzugs dafür auszunutzen, daß der Durchzug in einfacher Weise dauerhaft mit der Welle verbunden werden kann. Auf diese Weise ist es möglich, preiswert den aus Tiefziehblech bestehenden Hebel unlösbar mit der Welle, aber auch mit einem anderen Bauelement, wie beispielsweise einem Bolzen oder Kugelbolzen, zu verbinden. Dabei besteht das Prinzip darin, daß in den Durchzug von seiner äußeren Mantelfläche her nach dem Einfügen der Welle Vorsprünge eingeformt werden, die in entsprechende Rücksprünge innerhalb der Welle ragen und diese so gegenüber dem Hebel sichern. Dabei kann der Rücksprung bevorzugt aus einer umlaufenden Nut bestehen, in die einzelne Vorsprünge des Durchzugs oder aber auch entsprechend der vorteilhaften Weiterbildung nach Anspruch 2 ein umlaufender Vorsprung des Durchzugs ragt.

Um eine besonders gute Fixierung gegen axiales Verdrehen zu erhalten, empfiehlt sich in vorteilhafter Weiterbildung der Erfindung die Merkmalskombination nach Anspruch 3. Dabei kann durch Anwendung entsprechender Kräfte auf die äußere Mantelfläche des Durchzugs dessen innere Mantelfläche in die Verzahnung eingepreßt werden. Dabei wird durch eine verminderte Verformung die Öffnungsweite des Durchzuges geringer als der Durchmesser der Welle gehalten und diese danach in die Öffnung eingepreßt, wobei sich die Zähne der Axialverzahnung der Welle in die innere Mantelfläche des Durchzugs einschneiden.

Es läßt sich leicht einsehen, daß die Verwendung von verzinktem Tiefziehblech in der Regel preiswerter sein wird als die Anwendung kompakter Stahlteile, deren Oberfläche nach den einzelnen Bearbeitungsgängen noch nachbearbeitet und vergütet werden muß. Dabei hat das auf dem Stahlblech aufliegende Zink insbesondere die Eigenschaft, bei den Verformungs- und Stanzvorgängen über die neugebildete Oberfläche zu verschmieren und so in einfacher Weise für einen dauerhaften Korrosionsschutz zu sorgen. Diese Tatsache läßt sich in Weiterbildung der Erfindung durch die Merkmalskombination nach Anspruch 4 anwenden. Dabei werden die Bereiche des Hebels ausgestanzt, die für das Festigkeitsverhalten des Hebels nicht notwendig sind. Diese Bereiche lassen sich insbesondere dadurch vergrößern, daß die Festigkeit des Hebels entsprechend Anspruch 5 durch Sicken verstärkt ist. Durch das Ausstanzen der Ausnehmungen erhält man zum einen eine Material- und damit Gewichtsersparnis ohne daß der Hebel, wie weiter oben schon beschrieben, durch gesonderte Maßnahmen vor Korrosion geschützt werden muß.

Ein weiterer Vorteil besteht darin, daß durch derartige Maßnahmen erreicht werden kann, daß der Kraftfluß zwischen Welle und Hebel besser auf den gesamten Umfang des Durchzugs verteilt werden kann. Dies resultiert unter anderem aus der vergrößerten Elastizität des Hebels. Eine weitere Möglichkeit der Verstärkung der Befestigungsstelle zwischen Hebel und Welle ergibt sich durch die Merkmalskombination nach Anspruch 6. Hierdurch läßt sich in einfacher Weise die Materialstärke am Hebel örtlich vergrößern, was gleichzeitig aber die Gestaltung von Durchzügen mittels Tiefziehen nicht ausschließt.

Für den Fachmann ergibt sich ohne weiteres, daß die hinsichtlich der Welle gegenüber dem Hebel beschriebene Befestigungsmöglichkeit auch für andere Bauelemente gilt, wie beispielsweise Bolzen oder Kugelbolzen, Stifte und ähnliches. Die Erfindung ist somit nicht auf die Anwendung der Verbindung zwischen Welle und Hebel beschränkt, so daß auch eine Ausgestaltung entsprechend Anspruch 7 vorteilhaft ist.

Die Herstellung der Durchzüge und/oder der Sicken gestaltet sich besonders einfach durch die Anwendung der Merkmalskombination nach Anspruch 8, da in diesem Falle die Anzahl der Arbeitsgänge und der verwendeten Werkzeuge vermindert werden kann.

Ein Ausführungsbeispiel der Erfindung wird nach nachfolgend anhand der Zeichnung erläutert.

Dabei zeigt
- Fig. 1: eine erfindungsgemäße Befestigung einer Welle an einem Hebel,
- Fig. 2 und 3: mehrere an einem Hebel angeordnete Durchzüge sowie Ausnehmungen,
- Fig. 4 und 5: die Anwendung von Sicken,
- Fig. 6 und 7: Faltungen am Hebel zur Materialersparnis,
- Fig. 8: einen Hebel mit in gleicher Richtung weisenden Durchzug und Sicke,
- Fig. 9: eine weitere Ausführungsform der Erfindung.

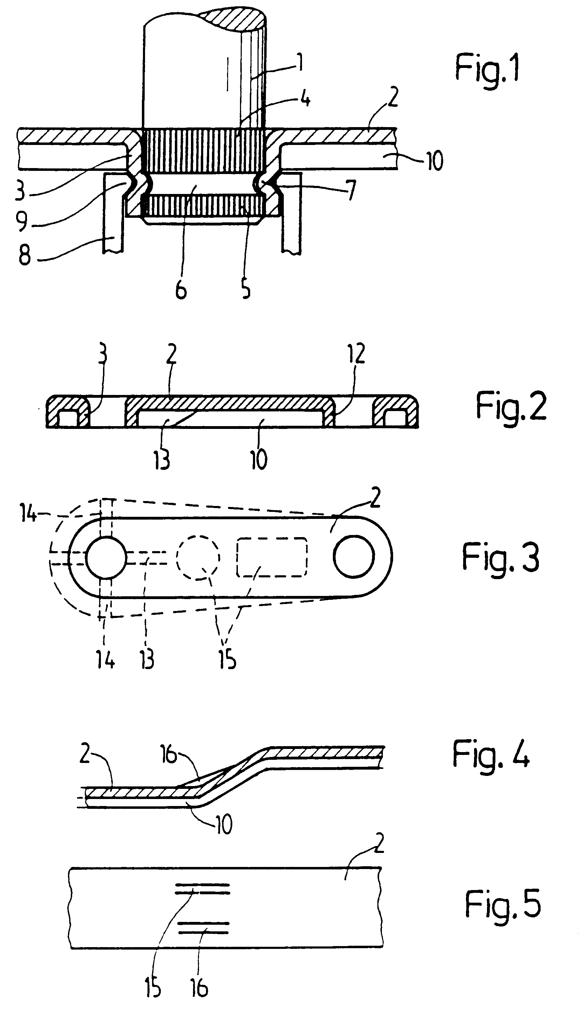

In Fig. 1 ist eine Welle 1 an einem Hebel 2 befestigt. Der Kurbelhebel 2 besteht aus verzinktem Stahlblech, in den durch Tiefziehen ein sogenannter Durchzug 3 eingeformt ist, d. h. ein umlaufender Kragen. In diesen Kragen ist der mit einer Längsverzahnung 4, 5 versehene Bereich der Welle 1 eingefügt. Dabei ist ein fester Sitz gewählt. Durch diese Maßnahme ist die Welle 1 gegenüber dem Hebel 2 gegen Verdrehen um seine Längsachse gesichert.

Der Hebel ist im Bereich der Längsverzahnung 4, 5 noch mit einer umlaufenden Nut 6 versehen, in die ein umlaufender Vorsprung 7 des Durchzuges 3 ragt. Hierdurch ist die Welle gegen eine Längsverschiebung gegenüber dem Hebel 2 gesichert. Der umlaufende Vorsprung 7 kann dadurch gebildet sein, daß ein Werkzeug 8 mit seinen angedeuteten Backen 9 derart verstellt wird, daß ein Bereich des Durchzugs umlaufend in die Nut 6 eingedrückt wird und so die Seitenwände der Nut hintergreift. Dieser Vorgang ist als Rollieren bekannt.

Zur Verstärkung gegen Verbiegung ist der Hebel 2 mit Sicken 10 versehen, die beispielsweise am Rand des Hebels umlaufen können.

Fig. 2 deutet die Möglichkeit an, neben einem ersten Durchzug 3 zur Halterung einer Welle einen zweiten Durchzug 12 vorzusehen, über den beispielsweise ein Kugelzapfen oder ein anderes Bauelement des Kurbelhebels 2 analog zu der Welle 1 befestigt werden kann.

Der Hebel 2 ist wiederum mit zumindest einer Sicke versehen, die um den äußeren Rand des Hebels 2 umläuft. Neben dieser Sicke 10 kann auch eine weitere Sicke 13 in Längsrichtung des Hebels 2 verlaufend angeformt werden, wie aus Fig. 2 und 3 ersichtlich. Zusätzliche Sicken 14 können quer zur Sicke 13 verlaufen, so daß die Sicken 13 und 14 strahlenförmig auf den Durchzug 3 zugehen.

Fig. 3 deutet weiterhin die Möglichkeit an, zur Gewichtsersparnis und zur Erzeugung einer größeren Elastizität des Hebels 2 Ausnehmungen 15 auszustanzen, durch welche der Kraftverlauf bei der Übertragung von Kräften zwischen der Welle 1 und dem Hebel 2 vorteilhaft beeinflußt werden kann.

Fig. 4 deutet die Möglichkeit an, den Hebel 2 derart zu verbiegen, daß er in zwei zueinander parallelen Ebenen verläuft. Die Übergangsstelle kann wiederum zur Erhöhung der Festigkeit mit gesonderten Sicken 15, 16 versehen sein, wie auch aus Fig. 5 deutlich zu erkennen ist. Dabei sind die Sicken in Längsrichtung des Hebels 2 verlaufend parallel zueinander versetzt.

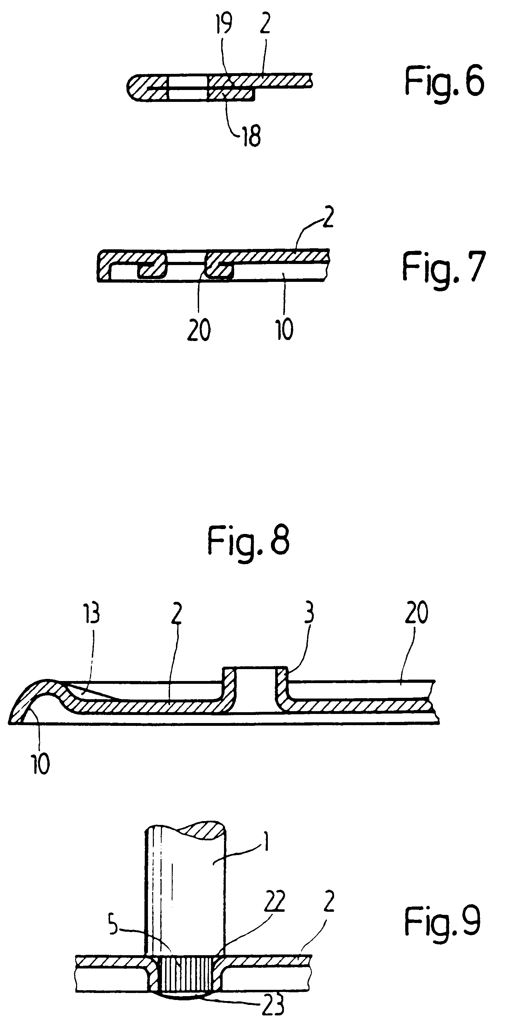

Die Figuren 6 und 7 zeigen weitere Möglichkeiten zur Verstärkung des Hebels 2 in Höhe des Verbindungsbereichs durch Falten des verzinkten Tiefziehblechs. Dabei besteht die Möglichkeit, einen größeren Abschnitt zu falten. Hierbei benötigt man relativ kleine Biegekräfte und erhält eine vergleichsweise große Verbindungsfläche 19, über welche der gefaltete Abschnitt 18 durch Schweißen, Kleben, Nieten oder Eigennietung mit dem verbleibenden Teil 2 des Hebels verbunden werden kann. Eine andere Möglichkeit der Faltung ist in Fig. 7 angedeutet, bei dem ein Durchzug so weit verlängert wird, daß er zu einem gefalteten Ringabschnitt 20 umgelegt werden kann. Der Vorteil der Ausführung nach Fig. 7 besteht unter anderem darin, daß wiederum Sicken 10 vorgesehen werden können und daß es gleichzeitig nicht notwendig ist, die beiden Schnittkanten von Hebel 2 und Abschnitt 18 in Fig. 6 zueinander auszurichten.

Fig. 8 zeigt die Möglichkeit, die Sicke 13 und den Durchzug 3 derart zu gestalten, daß sie in die gleiche Richtung weisen. Entsprechendes gilt für die Sicke 20, die um den äußeren Rand des Hebels 2 läuft. Der heruntergezogene Rand 10 ist entsprechend Fig. 1, 2, 3 und 4 gestaltet.

Eine weitere Möglichkeit zur Befestigung der Welle in der Öffnung ist in Fig. 9 dargestellt. Danach besitzt die Welle einen Absatz 22, der einen Anschlag am Kurbelhebel 2 bildet. Dieser Anschlag kann durch einen umlaufenden Vorsprung, aber auch wie in Fig. 9 dargestellt, dadurch geschaffen werden, daß der mit der Längsverzahnung 5 versehene Abschnitt am Ende der Welle 1 einen geringeren Druckmesser als der verbleibende Rest der Welle 1 besitzt. Auf diese Weise ist die Welle 1 in axialer Richtung in Fig. 9 nach unten gerichtet gesichert. Eine Sicherung in entgegengesetzter Richtung in Fig. 9 nach oben geschieht dadurch, daß ein überstehender Teil des Wellenendes zu einem Nietkopf 23 umgeformt wird, der die Öffnung in dem Kurbelhebel 2 hintergreift.

## Patentansprüche

1. Getriebeteil für eine Wischanlage von Kraftfahrzeugen mit einer antreibbaren Welle (1), wobei die Welle (1) eine Öffnung in einem aus Stahlblech geformten Kurbelhebel (2) mit einem durch Tiefziehen angeformten Befestigungsansatz (3) in Form eines umlaufenden Kragens durchdringt, und mit Befestigungsmitteln, welche den Kurbelhebel (2) gegenüber der Welle (1) fixieren, **gekennzeichnet durch** eine Kombination der folgenden Merkmale:
- der Kurbelhebel (2) ist aus verzinktem Stahlblech gefertigt,
- die Welle (1) ist in Axialrichtung in den Befestigungsansatz (3) eingepreßt, wobei dieser aufgeweitet wird,
- die Befestigungsmittel bestehen aus einer in die Welle (1) eingeformten, umlaufenden Nut (6), in die ein oder mehrere vorspringende Ansätze (7) ragen, die durch örtiches Eindrücken von Bereichen (7') des Befestigungsansatzes (3) in die Nut (6) gebildet sind.

2. Getriebeteil nach Anspruch 1, **dadurch gekennzeichnet,** daß ein umlaufender vorspringender Ansatz (7) in die Nut (6) eingreift, der vorzugsweise durch Rollieren in die Nut (6) eingepreßt ist.

3. Getriebeteil nach Anspruch 1 oder 2, **dadurch gekennzeichnet,** daß die Welle (1) aus einem festeren Material als der Kurbelhebel (2) gebildet ist und der oder die an die Nut (6) angrenzende/n Bereich/e mit einer Längsverzahnung (4, 5) versehen ist/sind.

4. Getriebeteil nach einem der vorangegangen Ansprüche, **dadurch gekennzeichnet,** daß in dem Gebiet zwischen der Welle und einem an dem Hebel (2) befestigten Bolzen eine oder mehrere Ausnehmungen (15) vorgesehen sind.

5. Getriebeteil nach einem der vorangegangenen Ansprüche, **dadurch gekennzeichnet,** daß der Kurbelhebel (2) mit vorzugsweise zwei in Längsrichtung verlaufenden, insbesondere an seinen Rändern angeordneten Sicken bzw. einer umlaufenden Sicke (10) versehen ist.

6. Getriebeteil nach einem der vorangegangenen Ansprüche, **dadurch gekennzeichnet,** daß der Kurbelhebel (2) zumindest im Bereich der Befestigung der Welle (1) und/oder des Bolzens aus zwei durch Falten übereinanderliegenden Lagen verzinkten Stahlblechs besteht, die miteinander unlösbar verbunden sind.

7. Getriebeteil nach einem der vorangegangenen Ansprüche, **dadurch gekennzeichnet,** daß ein Bolzen mit den gleichen Befestigungsmitteln an dem Kurbelhebel gehalten ist, wie die Welle (1).

8. Getriebe nach einem der vorangegangenen Ansprüche, **dadurch gekennzeichnet,** daß die Sicken (13 bis 16) und/oder der Kragen (3) des Kurbelhebels (2) in die gleiche Richtung weisen.

9. Getriebeteil nach einem der vorangegangenen Ansprüche, **dadurch gekennzeichnet,** daß die Befestigungsmittel einen umlaufenden Vorsprung (22) an der Welle (1) aufweisen, der als Anschlag in Axialrichtung der Welle (1) gegenüber dem Kurbelhebel (2) dient, und daß die Welle (1) in entgegengesetzter Richtung durch einen and der Welle angebrachten Nietkopf (23) gesichert ist, der die Öffnungskante hintergreift.

## Claims

1. A gear part for a wiper system of automotive vehicles including a drivable spindle (1), with the spindle (1) penetrating an opening provided in a crank lever (2) formed from sheet steel and having a fixing rim (3) integrally moulded on in the form of a peripheral collar by means of deep drawing, and fastening means which fixate the crank lever (2) in relation to the spindle (1), characterized by a combination of the following characteristics:
- the crank lever (2) is made from galvanized sheet steel;
- the spindle (1) is axially pressed into the fixing rim (3), thereby widening the rim;
- the fastening means comprise a peripheral groove (6) moulded into the spindle (1), into which groove (6) there project one or more projections (7) that are formed by denting areas (7') of the fixing rim (3) locally into the groove (6).

2. A gear part as claimed in claim 1,
characterized in that a peripheral projection (7) engages the groove (6), which projection (7) is preferably pressed into the groove (6) by means of rolling.

3. A gear part as claimed in claim 1 or in claim 2,
characterized in that the spindle (1) is formed of a stronger material than the crank lever (2), and in that the area(s) adjoining the groove (6) include(s) splines (4, 5).

4. A gear part as claimed in any one of the preceding claims,
characterized in that one or more clearances (15) are provided in the area between the spindle and a stud fastened to the lever (2).

5. A gear part as claimed in any one of the preceding claims,
characterized in that the crank lever (2) preferably includes two stiffening corrugations, extending lengthwise and particularly arranged on the edges of the lever, and/or one peripheral stiffening corrugation (10).

6. A gear part as claimed in any one of the preceding claims,
characterized in that, at least in the area of connection of the spindle (1) and/or the stud, the crank lever (2) consists of two superimposed coats of galvanized sheet steel which are formed by folding and connected with each other undetachably.

7. A gear part as claimed in any one of the preceding claims,
characterized in that a stud is held onto the crank lever by the same fastening means as the spindle (1).

8. A gear part as claimed in any one of the preceding claims,
characterized in that the stiffening corrugations (13 through 16) and/or the collar (3) of the crank lever (2) point in the same direction.

9. A gear part as claimed in any one of the preceding claims,
characterized in that the fastening means have a peripheral projection (22) on the spindle (1), which projection (22) serves as a stop along the axial direction of the spindle (1) in relation to the crank lever (2) and in that, in the opposite direction, the spindle (1) is secured by a rivet head (23) provided on the spindle and engaging the edge of the opening from behind.

## Revendications

1. Partie de mécanisme, destinée à un essui-glace pour véhicule automobile, qui comporte un arbre (1) agencé de façon à pouvoir être entrainé, l'arbre (1) traversant une ouverture ménagée dans un levier de manivelle (2) réalisé en tôle d'acier et comportant une partie en saillie de fixation (3) qui est réalisée au formage par emboutissage et se présente sous forme d'un collet qui fait tout le tour, et des moyens de fixation qui immobilisent le levier de manivelle (2) via-à-vis de l'arbre (1), caractérisée par une combinaison des particularités suivantes:
- le levier (1) est manivelle (2) est réalisé en tôle d'acier galvanisée,
- l'arbre (1) est enfoncé à force suivant la direction axiale dans la partie en saillie de fixation (3), ce qui élargit cette dernière,
- les moyens de fixation son constitués par une gorge (6) que est réalisée au formage dans l'arbre (1) et dans laquelle pénètrent une ou plusieurs parties en saillie (7) qui avancent et qui sont formées par enfoncement lacal à force de zones (7') de la partie en saillie de fixation (3) dans la gorge (6).

2. Partie de mécansme selon la revendication 1, caractérisée en ce qu'une partie en saillie (7) qui avance en faisant tout le tour s'accroche dans la gorge (6), cette partie en saillie étant enfoncée à force dans la gorge (6) de préférence par roulage.

3. Partie de mécanisme selon la revendication 1 ou 2, caractérisée en ce que l'arbre (1) est formé d'une matière plus résistante que le levier de manivelle (2) et en ce que la ou les zones adjacentes à la gorge (6) est/sont pourvue(s) d'une denture longitudinale (45).

4. Partie de mécanisme selon l'une des revendications précédentes, caractérisée en ce qu'une ou plusieurs parties repoussées (15) sont prévous dans la zone située entre l'arbre et un boulon fixé sur le levier (2).

5. Partie de mécansme selon l'une des revendications précédentes, caractérisée en ce que le levier de manivelle (2) est de préférence pourvu de deux nervures orientées suivant la direction longitudinale, en étant notamment disposées sur ses bords, ou d'une nervure (10) que en fait tout le tour.

6. Partie de mécanisme selon l'une des revendications précédentes, caratérisée en ce qu'au moins dans la zone de la fixation de l'arbre (1) et/ou du boulon, le levier de manivelle (2) est constitué de deux épaisseurs de tôle d'acier galvanisée qui sont disposées l'une au-dessus de l'autre par pliage de la tôle sur elle-même et qui sont rendues solidaires l'une de l'autre d'une manière inséparable.

7. Partie de mécanisme selon l'une des revendications précédentes, caractérisée en ce qu'un boulon est maintenu sur le levier de manivelle à l'aide de moyens de fixation identiques à ceux de l'arbre (1).

8. Partie mécanisme selon l'une de revendications précédentes, caractérisée en ce que les nervures (13 à 16) et/ou le collet (3) de levier de manivelle (2) sont orientés dans le même sens.

9. Partie de mécanisme selon l'une des revendications précédentes, caratérisée en ce que les moyens de fixation comportent une partie en saillie (22) qui est réalisée sur l'arbre (1) en en faisant tout le tour et qui sert de butée vis-à-vis du levier de manivelle (2) suivant la direction axiale de l'arbre (1) et en ce que l'arbre (1) est immobilisé dans le sens opposé au moyen d'une tête de rivet (23) que est disposée sur l'arbre et que s'accroche derrière le bord de l'ouverture.
